# EUROPÄISCHE PATENTSCHRIFT

(11) **EP 0 850 433 B1**
(45) Veröffentlichungstag und Bekanntmachung des Hinweises auf die Patenterteilung: **21.07.1999**
(21) Anmeldenummer: 96934385.4
(22) Anmeldetag: 27.08.1996
(51) Int. Cl.: G02B 6/42, G02B 6/32, B25J 7/00

(54) **EINRICHTUNG ZUM JUSTIEREN EINER KOMPONENTE ZUR OPTISCHEN SIGNALÜBERTRAGUNG**
DEVICE FOR ADJUSTING A COMPONENT FOR OPTICAL SIGNAL TRANSMISSION
DISPOSITIF PERMETTANT D'AJUSTER UN ELEMENT POUR LA TRANSMISSION OPTIQUE DE SIGNAUX

(30) Priorität: 11.09.1995 DE 19533545
(43) Veröffentlichungstag der Anmeldung: 01.07.1998
(73) Patentinhaber: SIEMENS AKTIENGESELLSCHAFT, 80333 München (DE)
(72) Erfinder: MAIR, Eduard, D-81477 München (DE)
(86) Internationale Anmeldenummer: DE9601590
(87) Internationale Veröffentlichungsnummer: WO9710526

(56) Entgegenhaltungen:
- EP-A- 0 176 397
- DE-U- 8 421 648
- GB-A- 2 158 605

## Beschreibung

Die Erfindung bezieht sich auf eine Einrichtung zum Justieren einer in einem Gehäuse aufgenommenen Komponente zur optischen Signalübertragung mittels zumindest einer Stellschraube zum Verändern der Lage der Komponente gegenüber dem Gehäuse. Eine derartige Einrichtung ist z.B. durch die DE-A 41 37 508 bekannt geworden. Danach wird eine Laserdiode mittels eines Mikromanipulators exakt auf eine Kugellinse ausgerichtet, an die sich ein Lichtwellenleiter anschließt. Die Laserdiode wird nach dem genauen Ausrichten durch Löten an einem Siliziumträger befestigt, an dem auch die Kugellinse und der Lichtleiter gehalten sind. Mikromanipulatoren weisen als Antriebsmittel Stellschrauben auf, die die Greiffinger für die Laserdiode bewegen.

In Vermittlungseinrichtungen der Telekommunikationstechnik werden die Signalverbindungen zukünftig auch über kurze Strecken mit Hilfe von Lichtleitern realisiert. Auch innerhalb von Baugruppenträgern werden insbesondere für höchstfrequente Signale optische Verbindungen benötigt. In der Zeitschrift "Optical Engineering" Okt. 1991 Vol. 30, No. 10; Seite 1620 bis 1623 ist ein Baugruppenträger mit einer lichtleitenden Glasplatte als Rückwand bekannt geworden. Von Sendemodulen einer Baugruppe werden Lichtstrahlen ausgesendet und unter einem Winkel von 45° in die Glasplatte derart eingekoppelt, daß sie zickzackförmig reflektiert genau auf Empfangsdioden anderer Baugruppen treffen. Um dies sicherzustellen, muß die Laserdiode mit der zugehörigen Fokussierlinse im eingebauten Zustand in beiden Koordinatenrichtungen justierbar sein. Dabei erschwert die enge Nachbarschaft der Module den Zugang zu den Komponenten.

Weitere Justiervorrichtungen sind aus GB-A-2 158 605 und EP-A-0 176 397 bekannt.

Der Erfindung liegt die Aufgabe zugrunde, eine Einrichtung zu schaffen, die eine Justierung der Komponenten mit geringem Aufwand und geringem Platzbedarf ermöglicht.

Diese Aufgabe wird durch die Erfindung gemäß des Anspruchs 1 gelost. Die Biegefeder legt sich eng an die Hülse an und benötigt daher wenig zusätzlichen seitlichen Raum. Die Stellschraube erstreckt sich in der Längsrichtung der Hülse und benötigt daher ebenfalls wenig zusätzlichen Raum. Sie kann z.B. auf einen schräg zur Schraubenachse verlaufenden Abschnitt der Biegefeder einwirken und diese so verbiegen, daß sich ihre Winkelstellung im bogenförmigen Bereich verändert. Damit wird auch die Winkelstellung der gelenkig gelagerten Hülse verändert. Mit diesem Verfahren ist es aber auch möglich, andere optische Komponenten der Signalübertragung z.B. ein Lichtleiterende zu justieren, daß in der Hülse gelenkig gelagert ist.

Vorteilhafte Weiterbildungen der Erfindung sind in den Ansprüchen 2 bis 9 gekennzeichnet.

Die Biegefeder nach Anspruch 2 ist von einfacher Form. Die Überdeckung der Hülse in ihrer gesamten Länge ergibt günstige Hebelverhältnisse. Die bogenförmige Krümmung ist so flach, daß sich ein großes Übersetzungsverhältnis für eine feinstufige Justierung ergibt.

Die Stellschraube nach Anspruch 3 wirkt unmittelbar auf den die Hülse überdeckenden Bereich der Biegefeder ein. Die Biegefedern dienen nicht nur als Verstellelemente sondern auch als Halteelemente die in jeder Stellung unter Vorspannung stehen und damit eine spielfreie Justierung ermöglichen.

Die Biegefeder nach Anspruch 4 dient sowohl als Spannfeder, die die Hülse gegen die Lagerstellen drückt, als auch als Einstellfeder, die außerhalb des Bereichs der Hülse betätigt werden kann. Durch diese Auslenkung in größerer Entfernung vom Drehpunkt der Hülse ergibt sich eine größere Übersetzung und feinere Verstellung. Außerdem kann die Stellschraube durch eine entsprechende Formgebung der Biegefeder in engerem Abstand zur Mittelachse der Hülse angeordnet werden, wodurch sich die Seitenabmessungen der Einrichtung verringern.

Durch die Weiterbildung der nach Anspruch 5 wird die Biegefeder unmittelbar von der Stellschraube verformt. Die Auflaufschräge ergibt sich durch einen diagonal in der Aufnahmekammer des Gehäuses verlaufende Federabschnitt.

Durch die Weiterbildung nach Anspruch 6 wird die Biegefeder indirekt durch die Betätigungsfeder verformt, auf die die Stellschraube einwirkt. Dadurch kann auf eine Auflaufschräge in der Biegefeder verzichtet werden, so daß diese den räumlichen Gegebenheiten und den Erfordernissen der Justierung optimal angepaßt werden kann.

Durch die Ringnut und die Stützelemente nach Anspruch 7 wird die schwenkbare Lagerung der Hülse mit geringem konstruktivem Aufwand realisiert.

Die Weiterbildung nach Anspruch 8 ergibt in einfacher Weise eine kardanische Lagerung der Hülse, so daß diese in zwei unterschiedlichen Koordinatenrichtungen einzeln geschwenkt werden kann.

Durch die Weiterbildung nach Anspruch 9 wird ein Verkanten der Stützelemente in der Ringnut vermieden. Durch die Längsnut kann die Kugel beim Verschwenken um das andere Stützelemente die erforderliche Längsbewegung ausführen. Das feststehende Stützelement kann ebenfalls eine Kugel sein, die in eine kegelförmige Vertiefung des Gehäuses spielfrei hineinragt.

Ausführungsbeispiele der Erfindung sind in der Zeichnung dargestellt und werden im folgenden näher erläutert:
- Figur 1: zeigt schematisch eine perspektivische Ansicht eines elektrooptischen Sendemoduls mit einem Gehäuse und einer Verstelleinrichtung,
- Figur 2: schematisiert eine Seitenansicht des Sendemoduls nach Figur 1 in einem anderen Gehäuse mit einer anderen Verstelleinrichtung,
- Figur 3: eine Draufsicht auf aneinandergereihte Einrichtungen nach Anspruch 2.

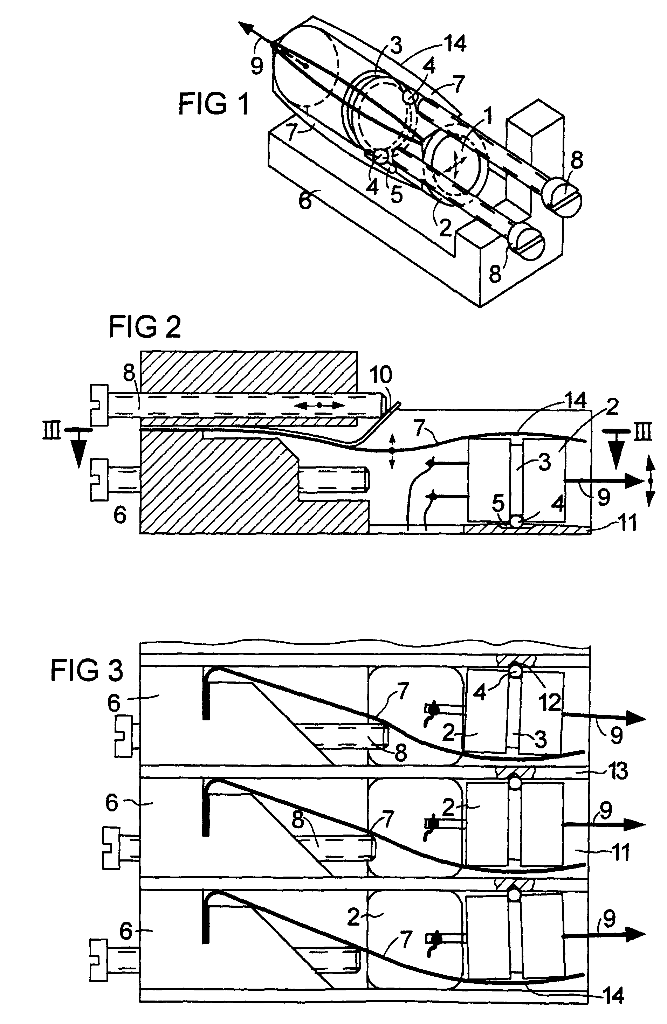

In Figur 1 ist das Funktionsprinzip einer Einrichtung zum Justieren der Winkellage einer elektrooptischen Komponente dargestellt, wobei auch verdeckte Teile zur besseren Kenntlichmachung volllinig ausgeführt sind. Eine elektrooptische Komponente 1 setzt sich z.B. aus einer Laserdiode und einer Fokussieroptik zusammen und ist in einer zylindrischen Hülse 2 aufgenommen, die mit einer mittleren Ringnut 3 versehen ist, in die zwei als Stützelemente dienende Kugeln 4 eingreifen. Diese sind zirkular um 90° zueinander versetzt angeordnet und im Gehäuse abgestützt. Dabei ist eine der beiden Kugeln in einer sich in der Achsrichtung der Hülse 2 erstreckenden Längsnut 5 geführt, die in einem Gehäuse 6 der Einrichtung ausgebildet ist. Die andere Kugel 4 ist in einer kegelförmigen Vertiefung einer nicht näher dargestellten Seitenwand des Gehäuses fixiert.

Zwei sich in der Längsrichtung der Hülse 2 erstreckende Biegefedern 7 liegen auf der den Kugeln jeweils gegenüberliegenden Seite der Hülse 2 an und drücken diese gegen die Kugeln 4, die damit in die Längsnut 5 und die Vertiefung gedrückt sind. Die Biegefedern 7 weisen eine flache bogenförmig Krümmung 14 auf, die mit ihrer konkaven Seite der Hülse 2 zugewandt ist. Sie liegen mit ihren beiden Enden an der Hülse 2 zu beiden Seiten der Ringnut 3 an. Die Hülse 2 ist auf den Kugeln 4 in zwei Koordinatenrichtungen schwenkbar kardanisch gelagert. Ihre Winkellage wird somit durch die Winkellage der als Blattfedern ausgebildete Biegefedern 7 bestimmt.

Zwei im Gehäuse 6 gelagerte Stellschrauben 8 erstrecken sich in der Längsrichtung der Hülse 2 und stoßen mit ihren freien Enden gegen die konvexe Außenseiten der Krümmungen 14. Diese bilden flache Auflaufschrägen, durch die die Biegefedern 7 beim Eindrehen der Stellschraube quer zu ihrer Längsrichtung ausgelenkt werden und somit ihre Winkellage verändern, was eine entsprechende Änderung der Winkellage der Hülse 2 mit der Komponente 1 ergibt. Durch Verstellen beider Stellschrauben kann die Hülse 2 in beiden Koordinatenrichtungen geschwenkt werden, wie dies durch das Pfeilkreuz in der Mitte der vorderen Stirnfläche angedeutet ist.

Ein auf der gegenüberliegenden Seite austretender Lichtstrahl 9 verändert entsprechend seine Richtung und kann somit genau auf eine in einem anderen Gehäuse gelagerte Empfangsdiode ausgerichtet werden. Da die Verstelleinrichtung in dem Gehäuse 6 verbleibt, ist eine Nachjustierung jederzeit möglich. Die Achsen der Stellschrauben 8 sind so eng entlang der Hülse 2 im Gehäuse 6 geführt, daß die Einbaubreite der Einrichtung klein gehalten werden kann, so daß mehrere Komponenten 1 eng benachbart aneinandergereiht werden können.

Nach den Figuren 2 und 3 sind die als Blattfedern ausgebildeten Biegefedern 7 über das Ende der Hülse 2 in der Richtung der Stellschrauben 8 verlängert und in diesem Bereich derart auslenkbar, daß die Winkellage der bogenförmigen Krümmung 14 analog zur Eindrehtiefe der Stellschrauben 8 verändert werden kann.

Nach Figur 2 liegt bei einer der Biegefedern 7 an deren verlängerten Ende eine Betätigungsfeder 10 an, die im Bereich des inneren Endes der Stellschraube 8 von der Biegefeder 7 schräg abgespreizt ist. Auf diese Abspreizung trifft die Stellschraube 8 und bewirkt beim weiteren Eindrehen, daß die Betätigungsfeder 10 mit der Biegefeder 7 von der Stellschraube 8 hinweg ausgelenkt wird. Diese durch die Bewegungspfeile angedeuteten Verstellbewegungen setzen sich in der die Hülse 2 überdeckenden bogenförmigen Krümmung 14 der Biegefeder 7 fort, so daß die Hülse 2 über der in der Längsnut gelagerten Kugel 4 entsprechend geschwenkt werden kann. Damit kann der Abstrahlwinkel des Lichtstrahls 9 verändert werden, wie dies durch den gekrümmten Bewegungspfeil angedeutet ist. Die Längsnut 5 ist in einem Boden 11 des Gehäuses 6 so eingelassen, daß die Kugel 4 in der Längsrichtung der Hülse 2 bewegt werden kann.

Nach Figur 3 sind mehrere Hülsen 2 mit in engem Teilungsabstand aneinandergereiht, dabei ist die jeweils andere Kugel 4 in einer kegelfömigen Vertiefung 12 gelagert, die in einer zum Boden 11 senkrechten Seitenwand 13 des Gehäuses 6 ausgebildet ist. Eine andere Biegefeder 7 ist mit ihrer bogenförmigen Krümmung 14 auf der der Kugel 4 gegenüberliegenden Seite an die Hülse 2 angedrückt. Sie ist auf der dem Lichtstrahl 9 gegenüberliegenden Seite zur Stellschraube 8 hin verlängert und weist einen sich diagonal erstreckenden Abschnitt auf, an den das innere Ende der Stellschraube 8 anstößt. Je nach Eindrehtiefe der Stellschraube 8 kann die Biegefeder 7 mehr oder weniger verformt werden, wie dies bei den verschiedenen Verstelleinrichtungen dargestellt ist. Dadurch wird die Winkellage der die Hülse 2 überdeckenden bogenförmigen Krümmung 14 verändert. Diese bewirkt ein Verschwenken der Hülse 2 über der Kugel 4 und damit eine Veränderung des Abstrahlwinkels des Lichtstrahls 9.

## Patentansprüche

1. Einrichtung zum Justieren einer Komponente (1) zur optischen Signalübertragung bestehend aus einem Gehäuse (6) und zumindest einer Stellschraube (8) zum Verändern der Lage der Komponente (1) gegenüber dem Gehäuse (6),
wobei
die Komponente (1) in eine in dem Gehäuse aufgenommene zylindrischen Hülse (2) einsetzbar ist, wobei die Hülse im Gehäuse (6) derart angebracht ist, daß sie im mittleren Längenbereich um zumindest eine Querachse schwenkbar gelagert ist,
eine sich in der Längsrichtung der Hülse (2) erstreckende, in das Gehäuse(6) eingesetzte Biegefeder (7) eine bogenförmige Krümmung (14) aufweist, die mit ihrer konkaven Seite an zwei in der Längsrichtung der Hülse hintereinanderliegenden Stellen an der Hülse (2) unter Vorspannung anliegt,
die beiden Stellen zu beiden Seiten des mittleren Bereichs der Hülse angeordnet sind,
die Stellschraube (8) im Gehäuse (6) bleibend gelagert ist und sich in der Längsrichtung der Hülse (2) erstreckt,
die Biegefeder (7) einen schräg zur Stellschraube verlaufenden Betätigungsabschnitt aufweist, dessen Winkelstellung relativ zur Längsachse der Hülse durch Verdrehen der Stellschraube veränderbar ist und wobei
die Veränderung der Winkellage des Betätigungsabschnittes in einer entsprechende Veränderung der Winkellage der bogenförmigen Krümmung und ein entsprechendes Schwenken der Hülse bewirkt.

2. Einrichtung nach Anspruch 1,
wobei
die Biegefeder (7) als Blattfeder ausgebildet ist,
daß sich die bogenförmige Krümmung (14) über die gesamte Länge der Biegefeder (7) erstreckt.

3. Einrichtung nach Anspruch 1 oder 2,
wobei
das freie Ende der Stellschraube (8) auf die bogenförmige Krümmung (14) ausgerichtet ist, und
ihr freies Ende gegen die der Hülse abgewandte Außenseite der Biegefeder (7) drückbar ist.

4. Einrichtung nach Anspruch 1 oder 2,
wobei
die Biegefeder (7) zur Stellschraube (8) hin über die Hülse (2) hinaus verlängert ist,
daß das verlängerte Ende der Biegefeder (7) im Gehäuse (6) verankert ist, daß die Biegefeder (7) im Abschnitt zwischen der Hülse (2) und der Verankerung im Gehäuse (6) auslenkbar ist, und
die Stellschraube (8) in diesem Betätigunsabschnitt auf die Biegefeder einwirkt und diese derart verformt, daß die Winkellage der bogenförmigen Krümmung (14) veränderbar ist.

5. Einrichtung nach Anspruch 4,
wobei
das freie Ende der Stellschraube (8) gegen den zur Schraubenachse schräg verlaufenden Betätigungsabschnitt der Biegefeder (7) gedrückt ist.

## Claims

1. Device for the adjustment of a component (1) for optical signal transmission, comprising a housing (6) and at least one setting screw (8) for varying the position of the component (1) with respect to the housing (6), it being possible for the component (1) to be inserted into a cylindrical sleeve (2) accommodated in the housing, the sleeve being fixed in the housing (6) in such a manner that in the central longitudinal region it is mounted such that it can pivot about at least one transverse axis,
a bending spring (7) which extends in the longitudinal direction of the sleeve (2) and is inserted into the housing (6) having an arcuate curvature (14) which, by way of its concave side, rests under prestress on the sleeve (2) at two points located one behind the other in the longitudinal direction of the sleeve,
the two points being arranged on either side of the central region of the sleeve,
the setting screw (8) being permanently mounted in the housing (6) and extending in the longitudinal direction of the sleeve (2),
the bending spring (7) having an actuating section which runs at an angle to the setting screw and whose angular position relative to the longitudinal axis of the sleeve can be varied by rotating the setting screw,
and varying the angular position of the actuating section effecting a corresponding variation in the angular position of the arcuate curvature and corresponding pivoting of the sleeve.

2. Device according to Claim 1, the bending spring (7) being designed as a leaf spring, and the arcuate curvature (14) extending over the entire length of the bending spring (7).

3. Device according to Claim 1 or 2, the free end of the setting screw (8) being aligned with the arcuate curvature (14), and it being possible for its free end to be pressed against the outer side, facing away from the sleeve, of the bending spring (7).

4. Device according to Claim 1 or 2, the bending spring (7) being lengthened beyond the sleeve (2) towards the setting screw (8),
the lengthened end of the bending spring (7) being anchored in the housing (6),
it being possible for the bending spring (7) to be deflected in the section between the sleeve (2) and the anchoring in the housing (6), and
the setting screw (8) acting on the bending spring in this actuating section and deforming the latter in such a way that the angular position of the arcuate curvature (14) can be varied.

5. Device according to Claim 4, the free end of the setting screw (8) being pressed against the actuating section of the bending spring (7) running at an angle to the screw axis.

## Revendications

1. Dispositif pour ajuster un composant (1) pour la transmission optique de signaux, constitué d'un boîtier (6) et d'au moins une vis (8) de réglage pour modifier la position du composant (1) par rapport au boîtier (6), dans lequel le composant (1) peut être inséré dans une douille (2) cylindrique reçue dans le boîtier, dans lequel la douille est montée dans le boîtier (6) de sorte qu'elle soit montée dans la région longitudinale médiane de manière à pouvoir basculer au moins autour d'un axe transversal,
un ressort (7) de flexion monté dans le boîtier (6) et s'étendant suivant la direction longitudinale de la douille (2) cylindrique comporte une courbure (14) en forme d'arc, qui s'applique sous précontrainte par son côté concave à la douille (2) en deux positions l'une derrière l'autre dans la direction longitudinale de la douille,
les deux positions sont disposées des deux côtés de la région médiane de la douille,
la vis (8) de réglage est montée de manière à rester dans le boîtier (6), et s'étend suivant la direction longitudinale de la douille (2),
le ressort (7) de flexion comporte un tronçon d'actionnement incliné par rapport à la vis de réglage, la position angulaire du tronçon par rapport à l'axe longitudinal de la douille pouvant être modifiée par rotation de la vis de réglage et
la modification de la position angulaire du tronçon d'actionnement entraîne une modification correspondante de la position angulaire de la courbure en forme d'arc et un basculement correspondant de la douille.

2. Dispositif suivant la revendication 1, dans lequel le ressort (7) de flexion est formé en tant que ressort à lame, de sorte que la courbure (14) en forme d'arc s'étend sur la totalité de la longueur du ressort (7) de flexion.

3. Dispositif suivant la revendication 1 ou 2, dans lequel l'extrémité libre de la vis (8) de réglage est orientée en direction de la courbure (14) en forme d'arc, et
son extrémité libre peut être poussée contre le côté extérieur du ressort (7) de flexion, qui est éloigné de la douille.

4. Dispositif suivant la revendication 1 ou 2, dans lequel le ressort (7) de flexion se prolonge vers la vis (8) de réglage au-delà de la douille (2),
l'extrémité prolongée du ressort (7) de flexion est ancrée dans le boîtier (6), de sorte que le ressort (7) de flexion peut être dévié dans le tronçon entre la douille (2) et la partie d'ancrage au boîtier (6), et
la vis (8) de réglage dans ce tronçon d'actionnement agit sur le ressort de flexion et déforme celui-ci de sorte que la position angulaire de la courbure (14) en forme d'arc peut être modifiée.

5. Dispositif suivant la revendication 4, dans lequel l'extrémité libre de la vis (8) de réglage est poussée contre le tronçon d'actionnement du ressort (7) de flexion, qui s'étend de manière inclinée par rapport à l'axe de la vis.
